**Europäisches Patentamt**

**European Patent Office**

**Office européen des brevets**

(19)

(11) Veröffentlichungsnummer: **0 082 356**
**A1**

(12) # EUROPÄISCHE PATENTANMELDUNG

(21) Anmeldenummer: **82111037.6**

(22) Anmeldetag: **30.11.82**

(51) Int. Cl.³: **B 65 G 54/02**
**H 02 K 41/025, B 65 G 47/26**

(30) Priorität: 30.11.81 DE 3147414
02.04.82 DE 3212463

(43) Veröffentlichungstag der Anmeldung:
**29.06.83 Patentblatt 83/26**

(84) Benannte Vertragsstaaten:
**AT CH DE FR GB IT LI**

(71) Anmelder: **EMAG MASCHINENFABRIK GMBH**
**Austrasse 24**
**D-7335 Salach/Württemberg(DE)**

(72) Erfinder: **Scholl, Herbert, Dr.**
**Buchenrain 149**
**D-7320 Göppingen(DE)**

(72) Erfinder: **Metz, Rudi**
**Dr.-Frey-Strasse 50**
**D-7322 Donzdorf(DE)**

(74) Vertreter: **Zmyj, Erwin, Dipl.-Ing.**
**Postfach 95 04 28**
**D-8000 München 95(DE)**

(54) **Vorrichtung zum Fördern ferromagnetischer Werkstücke.**

(57) Die Fördervorrichtung weist entlang eines Förderweges Haltemagnete auf, die entweder nacheinander magnetisiert und entmagnetisiert werden oder als Primärteil eines mehrphasigen linearen Induktionsmotors dienen, wenn die hintereinander liegenden Wicklungen von den Phasen einer Mehrphasen- Wechselstromquelle gespeist werden. Durch diese beiden Maßnahmen wird ein wanderndes Magnetfeld erzeugt, das zur Förderung der Werkstücke dient. Der für die zu übertragende Kraft wichtige Luftspalt zwischen den Magnetpolen und dem Werkstück wird entweder mechanisch durch Rollkörper (23) gewährleistet oder durch die einstellbare Haltekraft einander gegenüberliegender Haltemagnete zweier symmetrisch zueinander angeordneter Vorrichtungen gewährleistet. Zwischen den Polen (19) der Magnete oder um die Pole herum sind Sensoreinrichtungen (22) in Form von Induktionsspulen oder Halbleiterplättchen vorgesehen, um die genaue Lage eines Werkstückes entlang der Förderstrecke oder die relative Lage zwischen Werkstück und einem der Haltemagnete festzustellen. Die beim Eindringen der ferromagnetischen Werkstücke in das Magnetfeld eintretende Änderung der physikalischen Eigenschaften der Sensoreinrichtungen (22) dienen als Signale für Steuerzwecke, um das Werkstück an einer bestimmten Stelle der Förderstrecke abzulegen oder auch zum Ein-, Abschalten oder Umpolen der Erregerwicklungen (21) für das Fördern und Halten der Werkstücke.

Fig 4

EP 0 082 356 A1

Vorrichtung zum Fördern ferromagnetischer
Werkstücke

Die Erfindung bezieht sich auf eine Vorrichtung zum Fördern ferromagnetischer Werkstücke mit in ihrer Haltekraft beeinflußbaren Haltemagneten und einer Schleppeinrichtung für die Bewegung der Werkstücke in Transportrichtung.

Bisher bekannte Vorrichtungen dieser Art weisen eine mechanische Schleppeinrichtung in Form eines umlaufenden Bandes auf und erfordern neben dem einen verhältnismäßig großen Verschleiß unterworfenen Band auch noch Umlenkrollen und Stützrollen für das beim Fördervorgang leer durchlaufende Bandtrum. Außerdem sind die Förderstrecken begrenzt, so daß bei längeren Förderstrecken mehrere Bandförderer hintereinander angeordnet werden müssen. Jedes dieser Bandförderer erfordert dann wieder den erwähnten Aufwand.

Aufgabe der Erfindung ist es den mechanischen und den Energieaufwand sowie den Verschleiß von Teilen der Vorrichtung zu vermindern.

Dieses Aufgabe wird bei der eingangs erläuterten Vorrichtung zum Fördern ferromagnetischer Werkstücke mit in ihrer Haltekraft beeinflußbaren Haltemagneten und einer Schleppeinrichtung für die Bewegung der Werkstücke in Transportrichtung dadurch gelöst, daß die Schleppeinrichtung ein durch die Haltemagnete erzeugtes wanderndes Magnetfeld umfaßt, das die Werkstücke sowohl auf ihrer Führungsbahn hält als auch entlang dieser Bahn weiterbefördert.

Sämtliche zum Fördern der Werkstücke bisher erforderlichen mechanischen Einrichtungen können dadurch entfallen.

Eine Möglichkeit der Erzeugung eines wandernden Magnetfeldes besteht darin, daß das wandernde Magnetfeld durch die fortschreitende Magnetisierung und nachfolgende Entmagnetisierung der Haltemagnete erzeugt wird.

Es ist aber auch möglich die Einrichtung zur Erzeugung des wandernden Magnetfeldes durch die Haltemagnete dadurch zu bilden, daß sie den Primärteil eines mehrphasigen Linearinduktionsmotors bilden und eine durch die Phasenzahl teilbare Polpaarzahl oder Polzahl aufweisen, wobei die Wicklungen oder ein Teil der Wicklungen der Haltemagnete beim Aufnehmen des zu transportierenden Werkstückes mit Gleich- oder einphasigem Wechselstrom beaufschlagt und für den Transport des Werkstückes von den Phasen einer Mehrphasen-Wechselstromquelle gespeist werden, und wobei das Werkstück den Sekundärteil des Induktionsmotors bildet.

Bei einer Fördervorrichtung wie sie eingangs erläutert wurde, also mit in ihrer Haltekraft beeinflußbaren Haltemagneten und einer Schleppeinrichtung für die Bewegung der Werkstücke in Transportrichtung ist es beim Transport der Werkstücke häufig notwendig die jeweilige Lage der Werkstücke feststellen zu können. Dies ist für den Fall der Verwendung von mit Wechselstrom gespeister Elektromagnete möglich, wobei die Erregerwicklung des Elektromagneten gleichzeitig als Induktionsspule dient, in welcher bei einer Feldänderung eine Spannung induziert wird, die zur Feststellung der Position des Werkstückes herangezogen werden kann. Diese Lagebestimmung ist jedoch nicht exakt genug, insbesondere dann nicht, wenn festgestellt werden muß aus welcher Richtung sich das Werkstück dem jeweiligen Magneten der Fördervorrichtung nähert. Dies ist insbesondere dann wichtig, wenn die Fördervorrichtung ihrerseits an einer Transportvorrichtung, insbesondere an einer Hubvorrichtung angeordnet ist, mit welcher die Fördervorrichtung in einen Lagerbehälter abgesenkt werden kann, um Werkstücke aufzunehmen, die dann durch die Fördervorrichtung quer zur Hubrichtung befördert wird, um beispielsweise das Werkstück in eine genaue Position in Bezug auf eine Bearbeitungsmaschine zu fördern.

Es ist deshalb weiterhin Aufgabe der Erfindung die Fördervorrichtung so auszugestalten, daß die relative Lage von Werkstück und den einzelnen Magneten der Einrichtung zur Erzeugung des wandernden Magnetfeldes feststellbar und zusammen mit dieser Einrichtung zur Erzeugung des wandernden Magnetfeldes eine genaue Positionierung des Werkstückes bzw. seine Lagebestimmung an der Fördervorrichtung durchführbar ist. Außerdem soll durch das bei der Lagefeststellung erhältliche Signal die Funktionen der Fördervorrichtung steuerbar sein.

Diese Aufgabe wird ausgehend von der Vorrichtung der eingangs erläuterten Art erfindungsgemäß dadurch gelöst, daß mindestens einem der Magnete bzw. einem der Magnetpole der Einrichtung zur Erzeugung des wandernden Magnetfeldes mindestens eine Sensoreinrichtung zugeordnet ist, durch die die Änderung des Magnetfeldes infolge eines Eindringens eines vorwiegend ferromagnetischen Körpers in das Magnetfeld erfaßbar und zur Auslösung von Steuervorgängen verwendbar ist, wobei die Sensoreinrichtung bzw. die Sensoreinrichtungen zwischen den Magnetpolen und/oder um die Magnetpole herum angeordnet ist bzw. sind.

Unter einer Sensoreinrichtung ist jede Einrichtung zu verstehen, die bei Magnetfeldänderungen Änderungen ihrer physikalischen Eigenschaften erfährt, die meßbar und zur Auslösung von Steuervorgängen verwendbar sind.

Durch die Anordnung und Verwendung einer Sensoreinrichtung, die nicht gleichzeitig Erregerspule für den Magneten ist, wird die Voraussetzung dafür geschaffen, daß das Sensorsystem dieser Fördervorrichtung nicht nur besonders empfindlich auf geringfügige Magnetfeldänderungen reagiert, sondern daß auch die gewünschte Richtungsempfindlichkeit erzielbar ist, insbesondere wenn mehrere Sensoreinrichtungen vorgesehen sind, wodurch diese Fördervorrichtung nicht nur in der Lage ist die zu fördernden Werkstücke aufzusuchen, sondern auch längs des Förderweges genau zu positionieren, um beispielsweise die Werkstücke an eine Bearbeitungsmaschine abgeben und sie gegebenenfalls gleichzeitig entmagnetisieren zu können. Weiterhin können die durch die Sensoreinrichtungen erzeugten Signale zur Steuerung der Fördervorrichtung dienen, d. h. diese Signale können zum Einschalten, Abschalten oder Umpolen von Erregerwicklungen der Haltemagnete bzw. der Magnetpole herangezogen werden.

Der Impuls zum Umschalten von Gleich- oder einphasigem Wechselstrom auf mehrphasigen Wechselstrom kann in vorteilhafter Weise von der Sensoreinrichtung bzw. den Sensoreinrichtungen herrühren.

Um die Haltemagnete bzw. den Linearmotor nicht für eine Dauerleistung auslegen zu müssen und um Werkstücke nach einer bestimmten Förderstrecke abbremsen zu können, kann in weiterer vorteilhafter Ausgestaltung
der Erfindung das Signal einer der Sensoreinrichtungen
zum Ein- bzw. Abschalten oder Umpolen der in Förderrichtung vor bzw. hinter dem Werkstück liegenden Erregerwicklungen der Haltemagnete oder Magnetpole dienen.
Hierdurch ist es möglich diese Erregerwicklungen für
den kurzen Zeitabschnitt, in welchem das Werkstück
an ihnen vorbeigefördert wird, kurzzeitig zu überlasten,
um sie, nachdem das Werkstück weitergefördert wurde,
wieder abzuschalten.  Durch Umpolen der Erregerwicklungen
wird eine Kraft erzeugt, die der ursprünglichen Förderbewegung entgegenwirkt, so daß die Werkstücke abgebremst
und gegebenenfalls in ihrer Bewegungsrichtung umgekehrt
werden. Alle diese Signale zur Steuerung der erwähnten
Vorgänge liefern die zwischen den Magnetpolen oder um
die Magnetpole herum angeordneten Sensoreinrichtungen.

Als Sensoreinrichtung kann eine Induktuonsspule oder
ein Halbleiterplättchen dienen, wobei letzteres insbesondere dann zur Anwendung kommt, wenn die Haltemagnete
mit Gleichstrom gespeist werden.

Eine Verminderung des Verschleisses und Energieaufwandes
beim Fördern der Werkstücke wird dadurch erreicht, daß
in Weiterbildung der Erfindung über die Polfläche der
Haltemagnete hervorstehende Rollkörper entlang des Förderweges mit einem Abstand zueinander angeordnet sind, der
kleiner als die Abmessungen der zu fördernden Werkstücke
in Förderrichtung ist.

Durch diese Ausgestaltung wird, insbesondere dann, wenn
die Werkstücke unmittelbar an den Rollkörpern anliegen
der Energieaufwand für das Fördern der Werkstücke vermindert und außerdem ist der Verschleiß weit herabgesetzt, da die Werkstücke an leicht drehbaren Rollkörpern und nicht,wie bisher häufig üblich,an Förderbändern anliegen, die über die Magnetpole hinweggezogen werden und damit einem hohen Verschleiß unterliegen. Außerdem wird durch die unmittelbare Anlage der Werkstücke an den Rollkörpern ein geringer Luftspalt ermöglicht.

Da die Haltekraft eines Haltemagneten etwa mit der dritten Potenz des Abstandes zwischen Werkstück und Haltemagnet abnimmt, wird man bestrebt sein den Überstand der Rollkörper so gering wie möglich zu halten, damit die Haltekraft aufgrund des Abstandes nicht zu stark abnimmt.

Dies ist insbesondere dann notwendig, wenn die Rollkörper aus einem nicht magnetisierbaren Material bestehen, da diese Rollkörper nur für den Fall, daß sie aus einem magnetisierbaren Material bestehen zur Erzeugung der notwendigen Haltekraft beitragen können.

Eine besonders bevorzugte Ausgestaltung gemäß der Erfindung ist darin zu sehen, daß die Rollkörper mit Überstand in die Haltemagnete eingelassen und in diesen gelagert sind und daß die Rollkörper axial abschnittsweise magnetisiert sind, wobei die Polteilung der Rollkörper mit der Polteilung des zugeordneten Haltemagneten übereinstimmt. Hierdurch erhält man eine äußerst gedrängte Bauweise, da die Rollkörper in den Haltemagneten integriert sind, ohne daß ein Verlust an Polfläche eintreten würde, da die Rollkörper im gleichen Sinne wie die Haltemagnete magnetisierbar sind. Für den Fall der Verwendung von nicht magnetisierbaren Rollkörpern,die
in die Haltemagnete integriert sind, würde die Fläche,
die die Rollkörper einnehmen, von der wirksamen Polfläche entfallen. Hieraus ist ersichtlich, daß diese Art
der Ausgestaltung nur auf Sonderfälle beschränkt ist,
während die Integrierung der Rollkörper in den Haltemagneten und die gleichzeitige Magnetisierbarkeit der
Rollkörper die bevorzugte Ausführungsform darstellt.

Durch die Übereinstimmung der Polteilung von Rollkörper
und Haltemagnet werden stärkere Feldinhomogentitäten
in Förderrichtung vermieden, wodurch die Verschiebekraft
für das Werkstück gegenüber dem Haltemagnet klein bleibt,
weil praktisch keine entgegen der Bewegungsrichtung
verlaufende Kraft auf die Werkstücke ausgeübt wird.

Es ist nicht unbedingt erforderlich, daß die Rollkörper
in die Magnetpole eingelassen sind, sondern es kann auch
durchaus vorteilhaft sein, selbstständig aufgebaute Rollbahnen oder Röllchenbahnen vorzusehen, die die Werkstücke
in einem vorbestimmten Abstand zu den Magnetpolen halten
und eine äußerst reibungsarme Beförderung der Werkstücke
ermöglichen.

Diese zuletzt beschriebene Ausgestaltung ist insbesondere
dann vorteilhaft, wenn die Schleppeinrichtung ein wanderndes Magnetfeld von mehreren an einer umlauenden Kette oder
dgl. angeordneten Einzelmagneten umfassen, die unterhalb
der Rollkörper bzw. zwischen den Rollkörpern geführt
sind, wobei die Rollkörper über die Einzelmagnete hervorstehen. Dabei ist es wesentlich, daß der Abstand
zwischen den Magneten größer als die Abmessung der
Werkstücke in Förderrichtung ist. Bei dieser Ausgestaltung, die insbesondere dann zur Anwendung kommt, wenn die Werkstücke auf den Rollkörpern aufliegen und nicht von unten an ihnen haften, sind die sonst stationär angeordneten Haltemagnete an der umlaufenden Kette angeordnet, so daß sie die Werkstücke nicht nur an den Rollkörpern halten,um sie vor einem seitlichen Abgleiten zu schützen, sondern diese Haltemagnete übernehmen auch den Weitertransport der Werkstücke. Dabei können bei dieser Ausgestaltung selbstverständlich magnetisierbare Rollkörper verwendet werden, deren Polteilung mit der Polteilung der Haltemagnete, die gleichzeitig Fördermagnete sind, übereinstimmt. Diese Ausführungsform ist insbesondere für ein sogenanntes Stauband besonders vorteilhaft, weil die an einer bestimmten Endstelle angestauten Werkstücke nicht mehr gegen die Kraft eines unter ihnen durchrutschenden Förderbandes in dieser Staustellung gehalten werden müssen,sondern die Werkstücke ruhen auf den Rollkörpern auf und werden gegen den Anschlag nur mit der Kraft des nach unten abgelenkten Halte- und Fördermagneten gedrückt, der mittels der Kette nach unten geführt wird. Eine rutschende Reibung am Werkstück tritt hier also nicht mehr auf. Solche Staubänder werden beispielsweise bei Bearbeitungseinheiten mit automatischem Ablauf benötigt, wo es darauf ankommt, daß an einer bestimmten Stelle stets Werkstücke vorhanden sind, die von einer automatischen Abholvorrichtung, beispielsweise einem Roboter erfaßt und in eine Bearbeitungsmaschine eingebracht werden.

Wenn Rohre, Muffen oder Werkstücke mit Sonderprofilen gefördert werden sollen, so können in weiterer Ausgestaltung der Erfindung die Rollkörper als Profilkörper ausgebildet sein, der auf die zu befördernde Werkstücke abgestimmt ist und für die Förderung von stangenförmigen oder rohrförmigen Werkstücken sind die Rollkörper mit prismatischem Profil ausgebildet. Durch diese Maßnahme wird sichergestellt, daß ein Abwandern der zu fördernden Gegenstände aus der gewünschten Förderrichtung vermieden wird, weil durch die Profilierung der Rollkörper ein gewisser Formschluß zwischen Rollkörper und Werkstück eintritt, der das seitliche Abwandern verhindert. Bei magnetisierbaren Rollkörpern ist die Profilierung der Rollkörper in weiterer Ausgestaltung der Erfindung so ausgebildet, daß die Werkstücke die beiden Pole der Rollkörper über einen möglichst geringen Luftspalt verbinden. Hierdurch wird die magnetische Haftung maximal ausgenutzt. Bei der Förderung von stangenförmigen oder rohrförmigen Werkstücken wäre zwar eine konkave Profilierung der Rollkörper besonders günstig, doch müßte für unterschiedliche Durchmesser eine unterschiedliche Profilierung vorgesehen werden. Um mehrere Durchmessergrößen fördern zu können, empfiehlt sich deshalb die bereits erwähnte prismatische Profilierung der Rollkörper.

Wenn die zu fördernden stangenförmigen Werkstücke so große Durchmesserabmessungen aufweisen, daß durch eine Profilierung der Rollkörper eine Führung der Werkstücke nicht mehr möglich ist, so empfiehlt sich eine weitere Ausgestaltung gemäß der Erfindung, bei der die Polflächen der Haltemagnete bzw. der Magnetpole und die den Polflächen zugeordneten Rollkörper zueinander geneigt sind und ein Aufnahmeprisma für stangenförmige Werkstücke bilden, dessen Längsachse in Förderrichtung verläuft. Zusätzliche Führungseinrichtungen sind bei einer solchen Ausgestaltung nicht mehr notwendig.

Um eine Wirkung auf die Werkstücke auch bei größerem Abstand auszuüben, damit diese an die Fördervorrichtung angezogen werden, empfiehlt es sich, daß die Haltemagnete ein stark streuendes Magnetfeld aufweisen, was in bekannter Weise durch die Ausbildung der Pole des Magneten erzielt wird.

Die Verwendung von Elektromagneten in Gleichstrom- bzw. Wechselstromausführung bringt den Vorteil mit sich, daß die Feldstärke entsprechend den zu fördernden Werkstücken geregelt werden kann und daß außerdem ein Haltemagnet an einer bestimmten Stelle abgeschalten werden kann, um das Werkstück abzulegen. Weiterhin kann mittels wechselstromgespeister Elektromagnete die Lage des Werkstückes festgestellt werden, was nützlich ist, wenn man das Werkstück durch Abschalten des Magneten an einer bestimmten Stelle ablegen will.

Bei vielen der magnetisch geförderten Werkstücke besteht die Forderung, daß sie keine oder nur sehr geringe Remanenz aufweisen. Es ist daher notwendig vor der Ablegestelle für das Werkstück eine Entmagnetisiervorrichtung vorzusehen. Diese Entmagnetisierung wird durch einen wechselstromgespeisten Elektromagneten bewirkt, durch dessen Feld die Werkstücke hindurchgeführt werden. Diese Werkstücke sind dabei einem Wechselfeld abnehmender Amplitude ausgesetzt und werden dadurch entmagnetisiert.

Bei der Ausgestaltung der Erfindung, bei der das wandernde Magnetfeld dadurch erzeugt wird, daß die Haltemagnete den Primärteil eines mehrphasigen linearen Induktionsmotors bilden ist es vorteilhaft, wenn der für die zu übertragende Kraft wichtige Luftspalt zwischen den Magnetpolen und dem Werkstück durch die über die Polfläche der Haltemagnete hervorstehenden Rollkörper gewährleistet wird. Neben dieser Möglichkeit, bei welcher der notwendige Luftspalt durch mechanische Mittel, d.h. durch die erwähnten Rollkörper gewährleistet wird, besteht auch die Möglichkeit diesen Luftspalt durch Magnetkraft zu sichern.

Eine vorteilhafte Ausgestaltung der Erfindung zur Einhaltung des erwähnten Luftspalt besteht darin, daß eine weitere Vorrichtung entsprechend einem oder mehreren der Ansprüche 1 bis 8, d. h. eine weitere Vorrichtung, bei welcher die Haltemagnete den Primärteil eines mehrphasigen linearen Induktionsmotors bilden, symmetrisch zur ersten Vorrichtung, die ebenfalls in dieser Weise aufgebaut ist, angeordnet ist, daß die Polflächen der Haltemagnete beider Vorrichtungen einander gegenüberliegen und einen Abstand zwischen sich für die zu fördernden Werkstücke aufweisen und daß die Haltekraft gegenüberliegender Haltemagnete durch Sensoreinrichtungen so gesteuert ist, daß die Werkstücke zwischen beiden Vorrichtungen schwebend förderbar sind.Dabei handelt es sich bei .den Sensoreinrichtungen in vorteilhafter Weise um elektronische Einrichtungen.

Als Sensoreinrichtung für die Einstellung der jeweiligen Haltekraft, die für die Aufrechterhaltung des notwenidgen Luftspaltes zwischen Werkstücken und den einzelnen Magnetpolen erforderlich ist, können entweder die für die Steuerung der Erregerwicklungen des Linearinduktionsmotors vorhandenen Sensoreinrichtungen oder zusätzliche Sensoreinrichtungen dienen.

Die Erfindung ist in der Zeichnung beispielsweise dargestellt. In dieser zeigen:

Fig. 1    eine schematische Darstellung einer Fördervorrichtung nach der Erfindung;

Fig. 2    einen Schnitt nach der Linie II-II in Fig. 1;

Fig. 3    eine schaubildliche Darstellung einer abgewandel-
          ten Ausführungsform dererfindungsgemäßen Vorrich-
          tung für den Transport von stangenförmigen
          Material;

Fig. 4    eine weitere Ausführungsform einer als Linearmotor ausgebildeten Fördervorrichtung;

Fig. 5    eine gegenüber Fig. 4 abgewandelte Ausführungsform der Fördervorrichtung;

Fig. 6    eine weitere Ausführungsform der Fördervorrichtung nach der Erfindung;

Fig. 7    einen Ausschnitt einen nach einem anderen Prinzip
          arbeitenden weiteren Ausführungsform einer
          Fördervorrichtung;

Fig. 8    einen Endabschnitt einer weiteren Ausführungsform einer Fördervorrichtung in Form eines Staubandes; und

Fig. 9    einen Schnitt nach der Linie IX-IX in Fig. 8.

In der nachfolgenden Beschreibung der Ausführungsbeispiele sind gleiche oder unmittelbar miteinander
vergleichbare Teile mit den gleichen Bezugszeichen
versehen.

Wie aus den Darstellungen ersichtlich umfaßt eine
Vorrichtung zum Fördern ferromagnetischer Werkstücke
mehrere hintereinander angeordnete Magnete, die mit
I, II und III bezeichnet sind. Diese Magnete bestehen
jeweils aus einem Eisenkern 1 aus einzelnen Lamellenblechen und einer Wicklung 10, die um den Mittelpol 7
des E-förmigen Eisenkerns angeordnet ist. Die äußeren
Pole sind mit 8 bezeichnet, an denen Platten 11 angeordnet sind, die zur Lagerung von Rollen 2 dienen, an
denen die zu fördernden Werkstücke 3 anliegen und so
in einem festen Abstand zu den Magnetpolen gehalten
werden. Mit 9 ist das die Außenpole 8 mit dem Mittelpol 7 verbindende Joch bezeichnet.

Die Rollen 2 bestehen aus zwei äußeren, ferromagnetischen
Scheiben 12 und einer ebenfalls ferromagnetischen
Mittelscheibe 13, die jeweils den Polen 8 bzw. 7 zugeordnet und durch amagnetische Zwischenscheiben 14 miteinander verbunden sind. Auf diese Weise stellen die
magnetisierbaren Rollen 2 keine Unterbrechung der mit
15 bezeichneten Polflächen dar.

Die einzelnen Magnete sind außer durch die seitlichen
Platten 11 auch noch durch eine obere Platte 16 miteinander verbunden, die beide magnetisch leitend sind,
und ihre Wicklungen 10 werden während des Transportbetriebes von den Phasen einer Mehrphasen-Wechselstromquelle gespeist. Die Magnete I, II und III bilden den Primärteil eines mehrphasigen Linear-Induktionsmotor, bei dem der Sekundärteil durch das Werkstück 3 gebildet wird, welches mittels der Rollen 2 in einem festen Abstand zu den Magnetpolen gehalten wird, so daß der für die Kraftübertragung notwendige Luftspalt genau eingehalten werden kann.

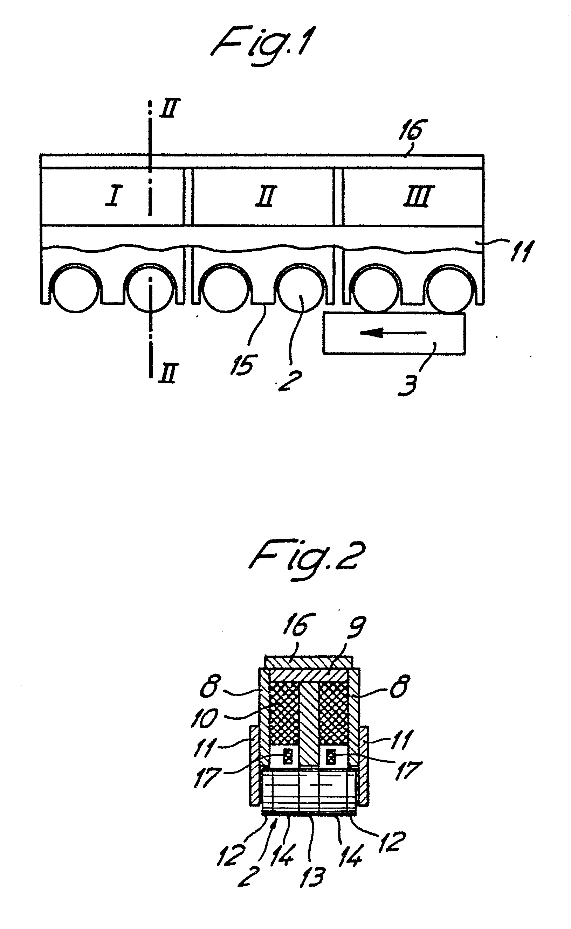

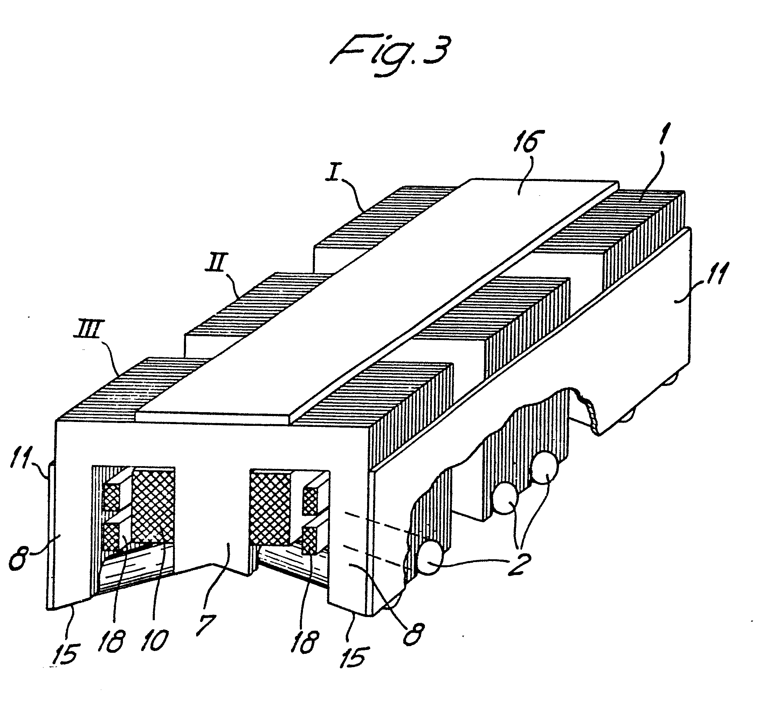

Bei der Ausführungsform nach den Fig. 1 und 2 ist um den Mittelpol 7 herum eine Induktionsspule 17 vorgesehen, die als Sensoreinrichtung dient und in welcher bei Annäherung eines ferromagnetischen Körpers eine Spannung induziert wird, die als Signal für verschiedene Steuerzwecke herangezogen werden kann. So ist es beispielsweise möglich die Haltemagnete beim Aussuchen eines Werkstückes in einem Vorratsbehälter mit Gleich- oder einphasigen Wechselstrom zu beaufschlagen um dann, wenn das Werkstück erfaßt ist von den Phasen einer mehrphasigen Wechselstromquelle gespeist zu werden, wodurch die Haltemagnete als Teile eines mehrphasigen linearen Induktionsmotors dienen und den Primärteil eines solchen Motors bilden.

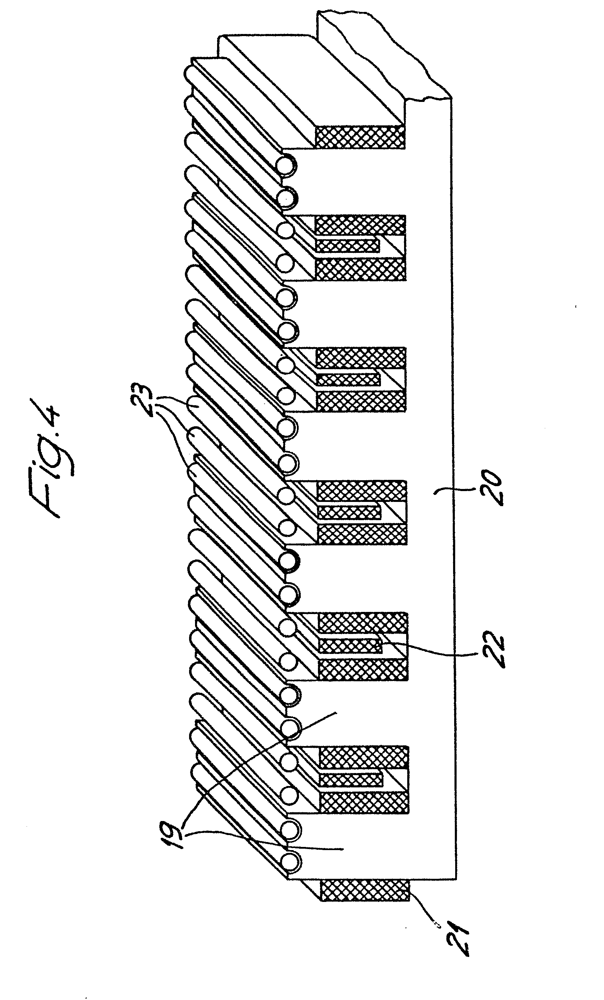

Die Fördervorrichtung nach Fig. 3, die ebenfalls aus einzelnen Lamellenblechen zusammengesetzte Magnete I, II, III usw. aufweist, die in beliebiger Folge hintereinander gesetzt und durch die magnetisch leitenden Platten 11 und 16 miteinander verbunden sind, weisen an ihrer Unterseite eine prismatische Formgebung auf, d. h. die Polflächen der äußeren Schenkel 8 sind zueinander geneigt, so daß sie mit dem prismatisch ausgebildeten Mittelschenkel 7 ein Aufnahmeprisma für stangenförmiges Material bilden. Die Rollkörper, die im vorliegenden Falle als Rollen ausgebildet sind, sind entsprechend der Neigung der Polflächen ebenfalls geneigt.

Diese Ausführungsform eignet sich nicht nur wegen der prismatischen Ausgestaltung sondern auch wegen der Magnetanordnung bzw. Erregerspulenanordnung besonders gut für den Transport von stangenförmigen Werkstücken Bei dieser Ausführungsform liegen die Förderrollen mit ihren Achsen quer zu den Polen. Mit 18 sind als Sensoreinrichtungen dienende Induktionsspulen bezeichnet, die zwischen den Schenkeln 7 und 8 vorgesehen sind. Selbstverständlich ist es auch hier möglich entsprechend der Darstellung in Fig. 2 eine Induktionsspule 17 um den Mittelpol 7 herum zusätzlich zu den Induktionsspulen 18 vorzusehen.

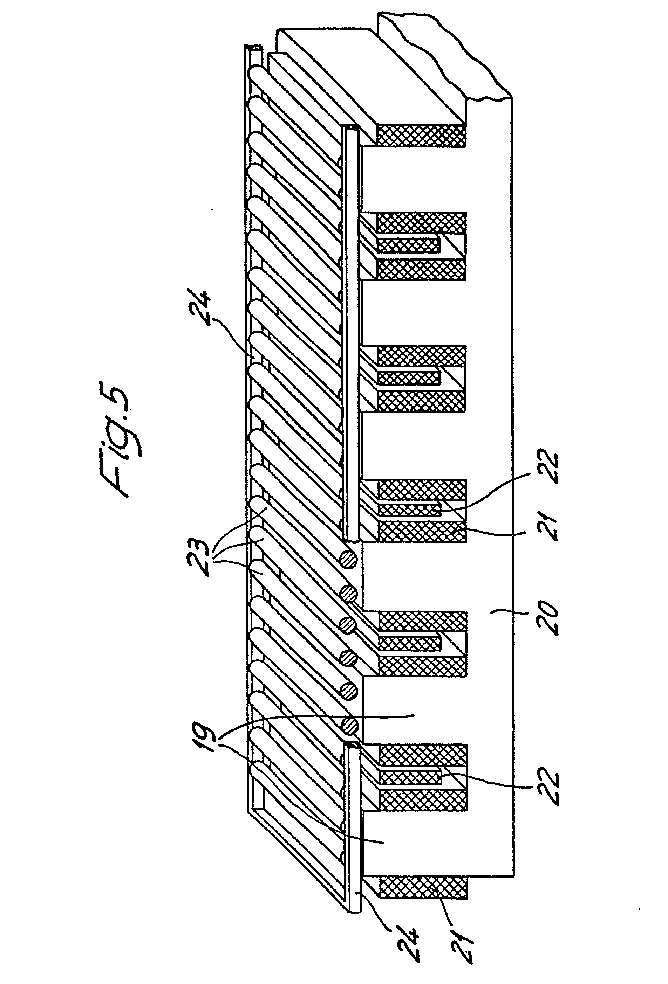

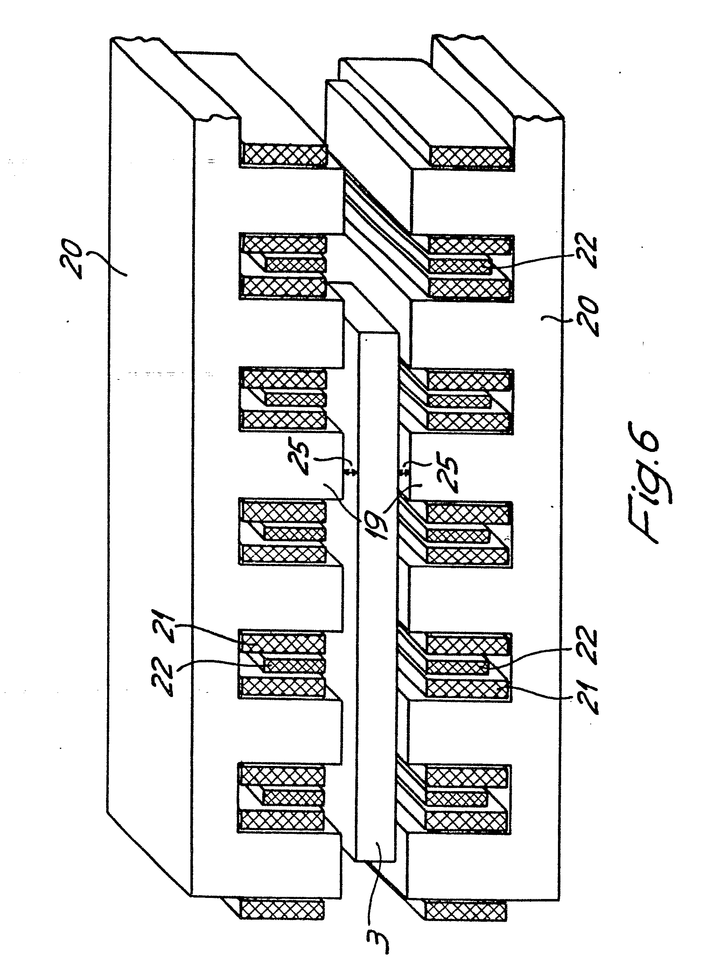

Die Fördervorrichtungen gemäß den Fig. 4 und 5 weisen einen kammartigen Magnetkörper 20 mit Schenkeln bzw. Polen 19 auf, um die Erregerwicklungen 21 angeordnet sind. Zwischen den Erregerwicklungen sitzen Sensoreinrichtungen 22, die als Induktionsspulen ausgebildet sind. Die zur Abstützung von Werkstücken dienenden Rollen 23 verlaufen mit ihren Achsen parallel zu den Polen 19 und sind bei der Ausführungsform nach Fig. 4 in die Magnetpole eingelassen, während diese Rollen 23 bei der Ausführungsform nach Fig. 5 in seitlichen Schienen 24 gelagert sind. Bei der Ausführungsform nach Fig. 5 sind also die Rollkörper unabhängig von dem aus den einzelnen Magnetpolen aufgebauten Linearmotor als selbstständige Baueinheit aufgebaut. Diese Art der Ausgestaltung vereinfacht den Aufbau der Magnetpole und damit des Magneten und ist insbesondere dann anwendbar, wenn die Rollkörper, beispielsweise als Röllchenbahn oder als Rollenbahn nur eine geringen Dickenabmessung aufweisen, so daß der Abstand zwischen den Magnetpolen und dem zu fördernden Werkstück nicht zu groß wird. Der Magnetkörper 20, dessen Länge der gewünschten Förderstrecke entsprechen kann, wenn es sich um eine nicht all zu große Förderstrecke handelt, bildet den Primärteil eines linearen Induktionsmotors, während das Werkstück den Sekundärteil bildet und durch die Rollen 23 in einem festen Abstand zu den Magnetpolen gehalten wird. Die Sensoreinrichtungen 22 dienen nicht nur zum Feststellen der jeweiligen Lage eines Werkstückes auf dem Induktionsmotor, sondern dienen auch dazu, die jeweils in Förderrichtung betrachtet hinter dem Werkstück liegenden Erregerwicklungen abzuschalten und die vor dem Werkstück liegenden Erregerwicklungen einzuschalten, so daß die Erregerwicklungen nur kurzzeitig eingeschaltet sind und entsprechend schwächer ausgeführt sein können, weil sie eine kurzzeitige Überlastung aushalten. Auch ist es möglich mit Hilfe der Signale der Sensoreinrichtungen eine Umpolung vorzunehmen, um das Werkstück abzubremsen oder gar in die entgegengesetzte Richtung zu befördern. Hierdurch ist es möglich das Werkstück in eine ganz bestimmte Lage auf dieser Fördereinrichtung zu bringen, die Teil einer größeren verfahrbaren Fördereinheit sein kann. Bei größeren Förderabschnitten wird es zweckmäßig sein mehrere Magnetkörper 20 untereinander durch magnetisch leitende Schienen oder Träger zu verbinden, wie dies bei den Ausführungen nach den Fig. 1 bis 3 schematisch angedeutet ist.

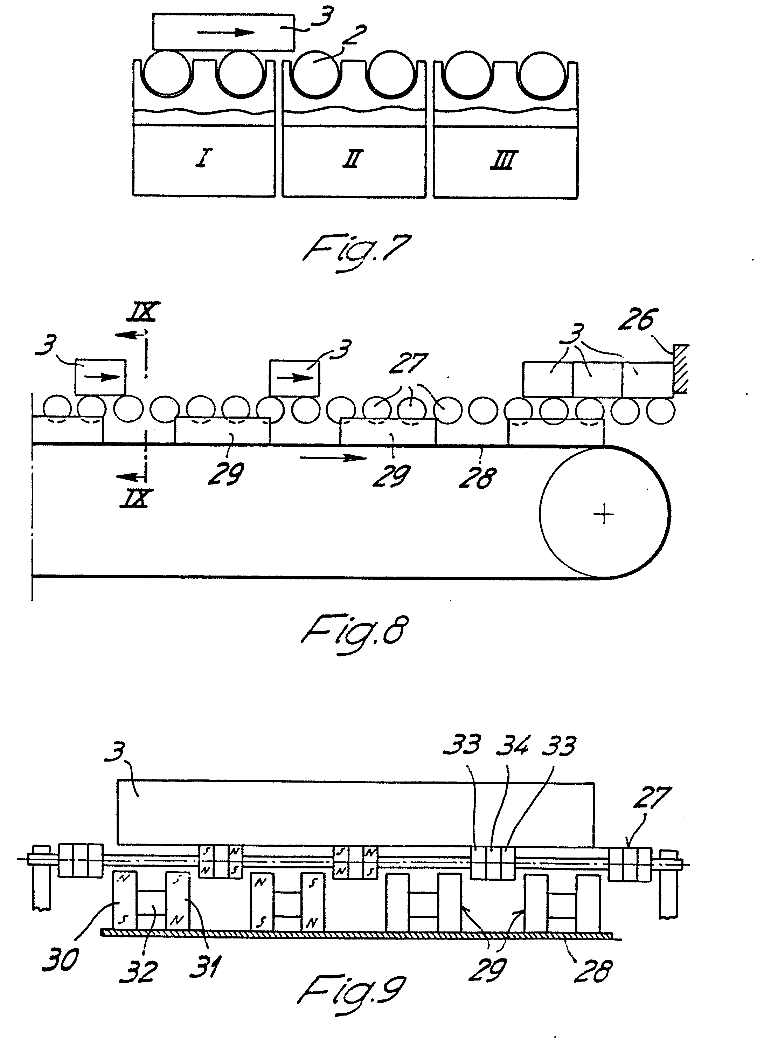

Bei der Ausführungsform nach Fig. 6 sind zwei Vorrichtungen nach Art derjenigen Vorrichtung symmetrisch übereinander angeordnet, die in Fig. 5 dargestellt ist, wobei Rollenanordnung bestehend aus Rollen 23 und Schienen 24 weggelassen sind. Zwischen den beiden Vorrichtungen ist ein so großer Spalt belassen, daß ein Werkstück 3 mit geringem Spalt 25 zu den gegenüberliegenden Magnetpolen 19 transportiert werden kann. Das Werkstück 3 wird mit Hilfe der Magnetkraft der Haltemagnete 20 die den Primärteil des linearen Induktionsmotors bilden nicht nur in der Schwebe gehalten, sondern auch weiterbefördert. Die Haltekraft gegenüberliegender Haltemagnete wird dabei durch die Sensoreinrichtung 22 so gesteuert, daß die Werkstücke in der eingezeichneten schwebenden Lage zwischen dem Magnetpolen gehalten und gefördert wird.

Es ist auch möglich zusätzlich zu der Sensoreinrichtung 22, die unter anderem die einzelnen Erregerwicklungen je nach Werkstücklage abschaltet oder einschaltet, nur für die Funktionen vorzusehen, die in Verbindung mit den Fig. 4 und 5 beschrieben wurden und für die Erzeugung der Haltekraft, um das Werkstück in der Schwebe zu halten, eine zusätzliche Sensoreinrichtung vorzusehen.

Bei der Ausführungsform nach Fig. 7 sind die Haltemagnete in ihrer Länge entsprechend denjenigen nach Fig. 1 ausgeführt, wobei die magnetisch leitende Platte 16 weggelassen ist. Die Haltemagnete sind in dieser Ausführungsform gemäß Fig. 7 so angeordnet, daß die Rollen 2 nach oben weisen, d. h. die Werkstücke ruhen auf den Rollen auf. Der Weitertransport des Werkstücks 3 erfolgt bei dieser Ausführungsform dadurch, daß die einzelnen Haltemagnete, die ebenfalls mit I, II, III usw. bezeichnet sind, der Reihe nach magnetisiert und anschließend entmagnetisiert werden, so daß das Werkstück mit dem fortschreitendem Magnetfeld mitwandert. Im dargestellten Ausführungsbeispiel wird gerade der Haltemagnet I so entmagnetisiert, daß er das Werkstück gerade noch halten kann, welches aber von dem neu magnetisierten Haltemagnet II stärker angezogen wird, so daß das Werkstück in Richtung auf den Haltemagnet II wandert. Auf diese Weise wird ein fortschreitendes Magnetfeld erzeugt, welches das Werkstück mitschleppt.

Bei der Ausführungsform einer Fördervorrichtung nach den Fig. 8 und 9 werden die einzelnen Werkstücke 3 auf Röllchen 27 aufliegend ebenfalls durch ein wanderndes Magnetfeld transportiert, welches durch auf einem umlaufenden Schleppband 28 angeordnete Halte- und Transportmagnete 29, die als Permanentmagnete ausgebildet sind, erzeugt wird.

Wie aus Fig. 9 ersichtlich besteht jeder Halte- und Transportmagnet 29 aus zwei Magneten 30 und 31, die entgegengesetzt ausgerichtete Polarität aufweisen. Diese beiden Magnete sind durch ein amagnetisches Zwischenstück 32 miteinander verbunden. Die einzelnen Röllchen 27 sind so angeordnet, daß sie über die obere Fläche der Halte- und Transportmagnete 29 hervorstehen, so daß ein aufliegendes Werkstück 3 nur auf den Röllchen 27 nicht aber auf den Halte- und Transportmagneten aufruht. Letztere werden mittels des Schleppbandes 28 zwischen den in Bahnen angeordneten Röllchen hindurchgeschleppt. Die Röllchen 27 sind dreiteilig ausgebildet und bestehen aus zwei äußeren Scheiben 33 aus einem magnetisierbaren Material und einer dazwischenliegenden Scheibe 34 aus amagnetischem Material. Während des Vorbeischleppens der Halte- und Transportmagnete werden die jeweils äußeren, den vorbeigeschleppten Magneten benachbarten Scheiben 33 magnetisiert und zwar mit einer jeweils dem zugeordneten Magnetpol der Haltemagneten entgegengesetzter Polarität. Diese ist in der Zeichnung mit "N" für Nordpol und "S" für Südpol gekennzeichnet. Die in Querrichtung benachbarten Haltemagnete sind so angeordnet, daß ein Südpol mit einem Nordpol abwechselt, wobei das dazwischenliegende Röllchen hierdurch entgegengesetzte Polaritäten induziert erhält. Der Abstand zwischen den Halte- und Transportmagneten ist kleiner als die Längserstreckung eines Werkstückes in Förderrichtung gesehen, so daß eine Beeinflussung durch den jeweils nachfolgenden Magneten entfällt.

Diese Ausgestaltung einer Fördervorrichtung dient als sogenanntes Stauband, bei welchem die Werkstücke gegen einen festen Anschlag 26 gefördert werden, um dort von einer automatischen Abholvorrichtung für die Bearbeitung, beispielsweise in einem Drehautomaten, abgeholt zu werden. Der Abstand der Röllchen 27 untereinander ist in Förderrichtung gesehen geringer als die Abmessungen eines Werkstückes in Förderrichtung, so daß die Werkstücke stets auf mindestens zwei hintereinander liegenden Röllchen aufruhen.

Patentansprüche

1. Vorrichtung zum Fördern ferromagnetischer Werkstücke mit in ihrer Haltekraft beeinflußbaren Haltemagneten und einer Schleppeinrichtung für die Bewegung der Werkstücke in Transportrichtung, dadurch gekennzeichnet, daß die Schleppeinrichtung ein durch die Haltemagnete (I, II, III) erzeugtes wanderndes Magnetfeld umfaßt, das die Werkstücke sowohl auf ihrer Führungsbahn hält als auch entlang dieser Bahn weiterbefördert.

2. Vorrichtung nach Anspruch 1, dadurch gekennzeichnet, daß das wandernde Magnetfeld durch die fortschreitende Magnetisierung und nachfolgende Entmagnetisierung der Haltemagnete (I, II, III) erzeugt wird.

3. Vorrichtung nach Anspruch 1, dadurch gekennzeichnet, daß die Einrichtung zur Erzeugung des wandernden Magnetfeldes durch die Haltemagnete (I, II, III; 20) gebildet ist, die den Primärteil eines mehrphasigen Linearinduktionsmotors bilden und eine durch die Phasenzahl teilbare Polpaarzahl oder Polzahl aufweisen, wobei die Wicklungen (10, 21) oder ein Teil der Wicklungen der Haltemagnete beim Aufnehmen des zu transportierenden Werkstückes (3) mit Gleich- oder einphasigem Wechselstrom beaufschlagt und für den Transport des Werkstückes von den Phasen einer Mehrphasen-Wechselstromquelle gespeist werden, und wobei das Werkstück den Sekundärteil des Induktionsmotors bildet.

4. Vorrichtung nach einem der Ansprüche 1 bis 3, dadurch g e k e n n z e i c h n e t , daß mindestens einem der Magnete (I, II, III) bzw. einem der Magnetpole (7,8; 19) mindestens eine Sensoreinrichtung (17, 18,22) zugeordnet ist, durch die die Änderung des Magnetfeldes infolge eines Eindringens eines vorwiegend ferromagnetischen Körpers in das Magnetfeld erfaßbar und zur Auslösung von Steuervorgängen verwendbar ist, wobei die Sensoreinrichtung bzw. die Sensoreinrichtungen zwischen den Magnetpolen (7, 8; 19) und/oder um die Magnetpole (7) herum angeordnet ist bzw. sind.

5. Vorrichtung nach einem der Ansprüche 1 bis 4, dadurch g e k e n n z e i c h n e t , daß der Impuls zum Umschalten von Gleich- oder einphasigem Wechselstrom auf mehrphasigen Wechselstrom von der Sensoreinrichtung bzw. den Sensoreinrichtungen (17, 18, 22) herrührt.

6. Vorrichtung nach einem der Ansprüche 1 bis 5, dadurch g e k e n n z e i c h n e t , daß das Signal einer der Sensoreinrichtungen (17, 18, 22) zum Ein- bzw. Abschalten oder Umpolen der in Förderrichtung vor- bzw. hinter dem Werkstück liegenden Erregerwicklungen der Haltemagnete (I, II, III) oder Magnetpole (19) dient.

7. Vorrichtung nach einem der Ansprüche 1 bis 6, dadurch g e k e n n z e i c h n e t , daß als Sensoreinrichtung (17, 18, 22) eine Induktionsspule dient.

8. Vorrichtung nach einem der Ansprüche 1 bis 6, dadurch g e k e n n z e i c h n e t , daß als Sensoreinrichtung ein Halbleiterplättchen dient.

9. Vorrichtung nach einem der Ansprüche 1 bis 8, dadurch g e k e n n z e i c h n e t , daß über die Polfläche (15) der Haltemagnete ( I, II, III) hervorstehende Rollkörper (2) entlang des Förderweges mit einem Abstand zueinander angeordnet sind, der kleiner als die Abmessungen der zu fördernden Werkstücke in Förderrichtung ist.

10. Vorrichtung nach Anspruch 9, dadurch g e k e n n z e i c h n e t , daß die Rollkörper als Walzen, Rollen, Röllchen, Kugeln o.dgl. ausgebildet sind.

11. Vorrichtung nach Anspruch 9 oder 10, dadurch g e k e n n z e i c h n e t , daß die Rollkörper aus magnetisierbarem Material bestehen.

12. Vorrichtung nach Anspruch 9 oder 10, dadurch g e k e n n z e i c h n e t , daß die Rollkörper aus nicht magnetisierbaren Material bestehen.

13. Vorrichtung nach einem der Ansprüche 9 bis 12, dadurch g e k e n n z e i c h n e t , daß die Rollkörper (2) mit Überstand in die Haltemagnete ( I, II, III) eingelassen und in diesen gelagert sind und daß die Rollkörper axial abschnittsweise magnetisiert sind,
wobei die Polteilung (12, 13, 12) der Rollkörper (2)
mit der Polteilung(8, 7, 8) des zugeordneten Haltemagneten (z. B. I) übereinstimmt.

14. Vorrichtung nach einem der Ansprüche 9 bis 13, dadurch   g e k e n n z e i c h n e t ,   daß die
Rollkörper (23) außerhalb der Magnetpole (19) in
einer Halterung (24) gelagert und den Magnetpolen
zugeordnet sind.

15. Vorrichtung nach Anspruch 1 oder 14, dadurch   g e -
k e n n z e i c h n e t ,   daß die Schleppeinrichtung ein wanderndes Magnetfeld in Form von mehreren
an einer umlaufenden Kette oder dergleichen (28)
angeordneten Einzelmagnete (29) umfaßt,die unterhalb der Rollkörper (27) bzw. zwischen den Rollkörpern geführt sind, wobei die Rollkörper über die
Einzelmagnete hervorstehen und daß der Abstand zwischen
den Magneten (29) größer als die Abmessung der Werkstücke in Förderrichtung ist.

16. Vorrichtung nach einem der Ansprüche 9 bis 15, dadurch   g e k e n n z e i c h n e t ,   daß die
Rollkörper als Profilkörper ausgebildet sind, der
auf die zu befördernden Werkstücke abgestimmt ist.

17. Vorrichtung nach Anspruch 16, dadurch   g e k e n n -
z e i c h n e t ,   daß für die Förderung von stangenförmigen oder rohrförmigen Werkstücken die Rollkörper
mit prismatischem Profil ausgebildet sind.

18. Vorrichtung nach einem der Ansprüche 1 bis 15, dadurch
g e k e n n z e i c h n e t ,   daß die Polflächen

der Haltemagnete (I, II, III) bzw. der Magnetpole und die den Polflächen zugeordneten Rollkörper (2) zueinander geneigt sind und ein Aufnahmeprisma für stangenförmige Werkstücke bilden, dessen Längsachse in Förderrichtung verlauft.

19. Vorrichtung nach einem der Ansprüche 16 bis 18 , dadurch g e k e n n z e i c h n e t , daß bei magnetisierbaren Rollkörpern die Profilierung der Rollkörper so ausgebildet ist, daß die Werkstücke die beiden Pole der Rollkörper über einen möglichst geringen Luftspalt verbinden.

20. Vorrichtung nach einem der Ansprüche 1 bis 19, dadurch g e k e n n z e i c h n e t , daß die Haltemagnete (z.B. I) ein stark streuendes Magnetfeld aufweisen.

21. Vorrichtung nach einem der Ansprüche 1 bis 20, dadurch g e k e n n z e i c h n e t , daß die Haltemagnete (I, II, III) als Elektromagnete in Gleichstrom- oder Wechselstromausführung ausgebildet sind.

22. Vorrichtung nach einem der Ansprüche 1 bis 21, dadurch g e k e n n z e i c h n e t , daß jeder Haltemagnet unabhängig von dem anderen Haltemagneten abschaltbar ist.

23. Vorrichtung nach einem der Ansprüche 9 bis 22, dadurch g e k e n n z e i c h n e t , daß die Werkstücke unmittelbar an den Rollkörpern (2) anliegen.

24. Vorrichtung nach einem der Ansprüche 1 bis 8, dadurch gekennzeichnet, daß eine weitere Vorrichtung entsprechend einem oder mehreren der Ansprüche 1 bis 8, symmetrisch zur ersten Vorrichtung angeordnet ist, daß die Polflächen der Haltemagnete (I, II, III) beider Vorrichtungen einander gegenüberliegen und einen Abstand zwischen sich für die zu fördernden Werkstücke aufweisen und daß die Haltekraft gegenüberliegender Haltemagnete durch Sensoreinrichtungen so gesteuert ist, daß die Werkstücke zwischen beiden Vorrichtungen schwebend förderbar sind.

25. Vorrichtung nach Anspruch 24, dadurch gekennzeichnet, daß als Sensoreinrichtung für die Steuerung der gegenseitigen Haltekraft zur Aufrechterhaltung eines Luftspaltes (25) zwischen dem Werkstück (3) und den Magnetpolen (19) entweder die für die Steuerung der Erregerwicklungen des Linearinduktionsmotors vorgesehenen Sensoreinrichtungen (22) oder zusätzliche Sensoreinrichtungen dienen.

*Fig.1*

*Fig.2*

*Fig.3*

Fig.4

Fig.5

Fig.6

Fig.7

Fig.8

Fig.9

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | --- | | B 65 G  54/02 |
| X | US-A-2 940 583  (LOVERCHECK)<br>* Spalte 2, Zeile 55 - Spalte 3, Zeile 32 * | 1,2 | H 02 K  41/025<br>B 65 G  47/26 |
| | --- | | |
| Y | DE-A-2 556 103  (BERTIN & CIE)<br>* Seite  4, Zeile 16 - Seite 5, Zeile 6; Seite 8, Zeilen 11-19; Figur 1 * | 1 | |
| A | | 3 | |
| | --- | | |
| Y | DE-A-2 945 109  (KRUPP STAHL AG)<br>* Ansprüche 1, 3, 4; Figuren 1, 2 * | 1 | |
| A | | 4,6,9,<br>10,23 | RECHERCHIERTE SACHGEBIETE (Int. Cl. 3) |
| | --- | | |
| A | DE-C-  925 997  (SPODIG)<br>* Anspruch 4; Figuren 1, 4 * | 9-14 | B 23 Q   5/00<br>B 65 G  13/00<br>B 65 G  17/00 |
| | --- | | |
| A | DE-U-1 824 288  (FRÖHLING)<br>* Ansprüche 1, 2 * | 9,10 | B 65 G  23/00<br>B 65 G  35/00<br>B 65 G  47/00<br>B 65 G  54/00 |
| | --- | | B 66 C   1/00 |
| A | US-A-3 685 634  (BERGLING)<br>* Anspruch 1; Figuren 1, 2 * | 15 | H 02 K  41/00 |
| | ---                    -/- | | |

Der vorliegende Recherchenbericht wurde für alle Patentansprüche erstellt.

| Recherchenort<br>BERLIN | Abschlußdatum der Recherche<br>15-02-1983 | Prüfer<br>SIMON J J P |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

Europäisches
Patentamt

**EUROPÄISCHER RECHERCHENBERICHT**

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-2 362 826 (N.V. PHILIPS' GLOEILAMPENFABRIEKEN) <br> * Figuren 6, 7 * | 15 | |
| A | DE-B-1 756 872 (BRITISH STEEL CORP.) <br> * Spalte 2, Zeile 67 - Spalte 3, Zeile 30 * | 16, 17 | |
| A | GLÜCKAUF, Band 109, Nr. 5, 1. März 1973 R. SCHÜTZ "Asynchrone Linearmotoren und ihre Anwendungen" Seiten 308-315 <br> * Seite 309; Figur 1 * | 24 | |
| A | DE-A-2 102 234 (VEB WERKZEUGMASCHINENKOMBINAT FRITZ HECKERT) | | |

RECHERCHIERTE
SACHGEBIETE (Int. Cl. ³)

Der vorliegende Recherchenbericht wurde für alle Patentansprüche erstellt.

| Recherchenort <br> BERLIN | Abschlußdatum der Recherche <br> 15-02-1983 | Prüfer <br> SIMON J J P |
|---|---|---|